# EUROPEAN PATENT SPECIFICATION

(11) **EP 2 687 733 B1**
(45) Date of publication and mention of the grant of the patent: **13.01.2016**
(21) Application number: 12075087.2
(22) Date of filing: 18.07.2012
(51) Int. Cl.: F16B 7/14

(54) **Clamping fitting for telescopic tent poles**
Klemmstück für Teleskopzeltstangen
Ferrure de serrage pour mâts de tente télescopiques

(43) Date of publication of application: 22.01.2014
(73) Proprietor: Campion Production ApS, 7100 Vejle (DK)
(72) Inventor: Jørgensen, Niels Kristian, 7080 Børkop (DK)
(74) Representative: Heiden, Finn

(56) References cited:
- US-A- 2 849 249

## Description

The present invention concerns clamping fittings for telescopic poles generally used in the field of camping and leisure.

Such telescopic poles with clamping fittings are used in frames and supports in tents and especially in awnings for caravans, but also in canopies and as legs carrying a table, such as a stowaway table. The clamping fittings comprise a tubular housing surrounding the telescopic parts of the poles. In the housing is the end of the outer pole permanently fixed, such as by a press-fitting. A pair of parallel extending flanges is arranged at the side of the housing. The flanges could be in the form of material thickenings, rounded as such or even more plate-shaped. Between the flanges is pivotally arranged the inner eccentric end of a lever arm, having axis of pivot extending transverse to the axis of the poles.

When the lever arm is turned to a position where it extends outwards from the surface of the housing, the poles may be telescopically adjusted until proper length and adjustment is achieved. Then, the lever arm is turned and pressed in towards the housing until the lever lay against the outer surface thereof. By doing so, the eccentric exercises an increasing pressure and the telescopic poles are arrested in the position.

US 2 849 249 A discloses a clamping device as described above for telescopic poles in umbrellas and sunshades. The housing material between the flanges is substituted by thin plate material onto which the eccentric provides pressure against the inner pole in the locking position thereof.

The poles used with the clamping fittings are typically steel, aluminium, plastic or carbon tubes having outer diameter from 20 to 30 mm. These poles are today of lighter weight than before to achieve easier handling and mounting, but also for reducing the energy to transport the poles around during camping and leisure. The today's desired light-weight poles are then either metal poles, which are typically more thin-walled than before, or we are talking about poles made of more sophisticated materials such as of carbon. The poles always have a smooth outer surface which makes it a challenge to arrest something on them without making severe damage. The outer surface is typically of hard-galvanized steel to prevent corrosion. The hard and smooth surfaces have influence on operators capability to tighten the clamping fittings properly. It is especially more difficult for persons with weaker strength in their hands. The achieved tightening will vary and may result in in-secure locking of the poles.

When positioning such telescopic poles in relation to each other it's not possible to use the traditional screws as were often used for more thick-walled steel poles. The screws were mounted in a nut welded on to the outside of the outer tube and simply screwed directly into the outer surface of the inner pole for arresting the poles. The clamping can be effective, but then always left a buckle -like depression in the inner pole. With today's more thin-walled or sophisticated carbon poles the wall would simply be damaged with the danger of breakage.

By a known clamping fitting the inner end of the lever is parted in two leg parts. The two leg parts grips on the outside of the flanges of the housing, so that the flanges are arranged in between the leg parts. A pin bolt extends through aligned holes in the two leg parts and in the flanges. The pin bolt has a screw in the one end for axial adjustment of the length thereof and consequently for the mutual distance between the leg parts, The housing is slit open all the way longitudinally from the one end to the other end. The slit runs in between the two flanges. Thread-like eccentrics are arranged on both insides of the leg parts of the lever for acting on knobs or thickenings arranged on the outside of the particular flange. Then, when the lever arm is turned in against the pole the eccentrics exert axial pressure in direction against each other, i.e. in the axial direction of the pin bolt. The two flanges are thereby pressed in towards each other thereby squeezing or clamping the housing peripherally around the inner pole for arresting the housing with the fixed outer pole in position on the inner pole. The screw of the pin bolt must be adjusted to the exact pre-pressure for the housing to exert sufficient pressure around the particular pole diameter. That is cumbersome to do, especially during raising the tent or awning. It is pertinent, that this adjustment of the screw of the pin bolt is done from time to time. Otherwise the housing may slide on the periphery of the inner pole.

By the present invention, an opening is arranged in the periphery of the tubular housing between the pair of flanges, and a bridge-formed clamp of plate material having two legs and a base part there between is arranged in the opening, so that the rims of the free ends of the legs extend transversely to the axis of the poles and are adapted to come into engagement with the outer surface of the inner pole, when the base part is engaged by the inner eccentric end of the lever arm.
When the lever arm is pressed in towards the housing the eccentric inner end of the lever increase pressure onto the base part whereby the free ends of the legs come to engagement with the outer surface of the inner tube. Further turning the lever in towards the housing further increases the pressure of the rims of the ends of the legs towards the outside of the inner pole. The housing is thereby positioned and locked securely on the inner pole. The focused engagement of the transverse rims of the bridge-formed clamp with the outside of the inner pole is similar to when teeth "bite". The engagement provides a lock that is strong against axial forces and consequently reliable. The lever arm transfers high loads directly to the rims so that the lever can be handled by the thumb of one hand only. The persons other hand can then hold onto the inner tube whereby both un-locking and locking of the poles is done by one person alone.

When the legs of the bridge-formed clamp extend away from each other with a V-form axial holding force against compression as well as against draw are high. Both legs are then inclined to the poles, so that a force component is taken up directly into the direction of the plate material of the legs.

A further severe increase of the axial holding force is achieved when the free ends of the legs of the bridge-formed clamp has rims that are cut sharp. The sharp rims simply cuts a little into the surface of the inner pole thereby increasing axial holding force.

The extensions of the rims are advantageously concave circular arcs. The engagement surface with the pole surface is then prolonged so that the rims are highly gentle to the pole surface when engaged therewith. When the arcs of the rims follows the curvature of the outer surface of the pole all the extension of the rims the gentle engagement is optimal and the locking effect is still highly effective. The embodiment is advantageous for advanced poles made of carbon fibres.

When the bridge-formed clamp is made of leaf-spring plate material a biased compression force is ensured when the lever arm is clamped into locking position. During different temperatures, such as from winter to summer, the biasing force compensates for changes in material size so that the engagement is kept safe. The biasing force also compensates for differences in pole diameters and slight movements of the tubular housing due to changes in loads thereon.

The eccentric inner end of the lever arm can advantageously have a flat part adapted to rest on the base part of the bridge-formed clamp in the un-locking position of the lever arm. It is then easy to find and activate the lever with the thumb. Also the lever turns to the un-locking position fast by it self when initially pressed out from the pole. The lever is then fixed in the same position when un-locked and there is no razzle-dazzle when the two poles are handled.

Advantageously a compression spring is arranged in between the base part of the bridge-formed clamp and the outside of the inner pole. The spring helps the lever arm to pivot the rest of the way to its un-locking position when initially turned out from the pole. The force of the compression spring also lifts the bridge-formed clamp radial out from the pole. The rims of the free ends of the legs are then raised and kept free from engagement with the surface of the inner pole when the poles are adjusted axially in relation to each other.

When the compression spring is a leaf spring the planar surface of it slides easily onto the surface of the pole without damaging it.

The invention is described further in more detail by referring to the drawing, in which
Fig. 1 discloses the clamping fitting according to the invention, seen in perspective view mounted on two telescopic poles,
Fig. 2 the inventive fitting of figure 1 seen in exploded view,
Fig. 3 a camper with an frame for an awning, which frame has telescopic poles locked by the inventive clamping fitting,
Fig. 4 a table having telescopic poles locked by the inventive fittings,
Fig. 5 schematically the inventive fitting in locked position on telescopic poles, seen in longitudinal section,
Fig. 6 the same in un-locking position,
Fig. 7 schematically the bridge-formed clamp seen in perspective in locking position with the inner pole,
Fig. 8 the same, seen from the end of the tube,
Fig. 9 same as in figure 7, seen in the un-locking position, and
Fig. 10 the same, seen from the end of the pole.

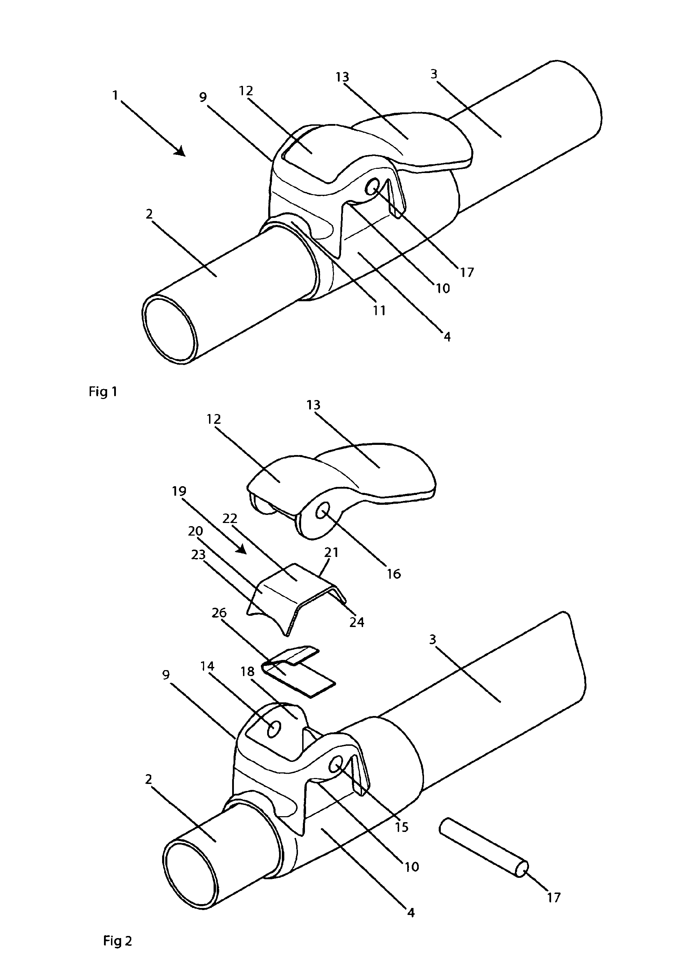

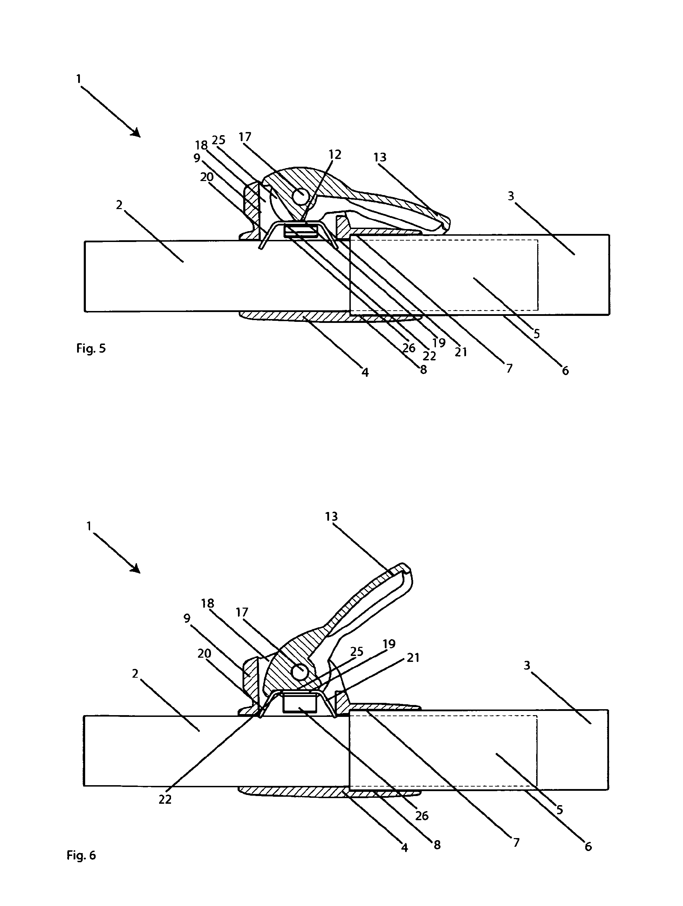

The clamping fitting 1 for telescopic poles 2, 3, disclosed in figure 1 comprises a tubular housing 4. The tubular housing 4 is surrounding the telescopic parts 5, 6 of the poles 2, 3 as disclosed in figures 5, 6 in more detail. The end 7 of the outer pole 3 is permanently fixed in a bore 8 in the housing 4 by a press-fitting, so that the housing 4 remains on the end 7 of the outer pole 3 during loads on the poles 2, 3.

A pair of parallel extending flanges 9, 10 is arranged at the side 11 of the housing 4. Between the flanges 9,10 is pivotally arranged the inner eccentric end 12 of a lever arm 13. Aligned holes 14,15 are made in the flanges 9,10 and a bore 16 is made in the end 12 of the lever arm 13. A pin bolt 17 is inserted through the holes 14, 15 and the bore 16 so that the lever arm can pivot around it. The axis of pivot of the pin bolt 17 is then extending transverse to the axis of the poles 2, 3.

As disclosed in figures 2, 5 and 6 an opening 18 is arranged in the periphery of the tubular housing 4 between the pair of flanges 9,10. A bridge-formed clamp 19 of plate material is arranged in the opening 18. The bridge-formed clamp 19 has two legs 20, 21 and a base part 22 there between as disclosed in detail in figures 2, 5-10. The rims 23, 24 of the free ends of the legs 20, 21 extend transversely to the axis of the poles 2, 3 and are adapted to come into engagement with the outer surface of the inner pole 2 when the base part 22 is engaged by the inner eccentric end 12 of the lever arm 13, as disclosed in figure 5, 7 and 8.

The eccentric inner end 12 of the lever arm 13 has a flat part 25, which is adapted to rest on the base part 22 of the bridge-formed clamp 19 in the un-locking position of the lever arm 13, i.e. figure 5. For supporting lift of the clamp 19 up from the inner pole 2 in the un-locking position of the lever arm 13, a compression spring 26 is arranged in between the base part 22 of the bridge-formed clamp 19 and the outside of the inner pole 2. At the preferred embodiment disclosed in figures 2, 5 and 6 the compression spring is disclosed as a leaf-spring 26 that easily slides on the surface of the inner pole 2 when repositioning the telescopic poles 2, 3. The spring 26 may also rest with it's ends in opposite recesses in the respective flanges 9, 10 of the housing 4. The spring 26 is then arrested in the housing when the pole 2 is pulled out.

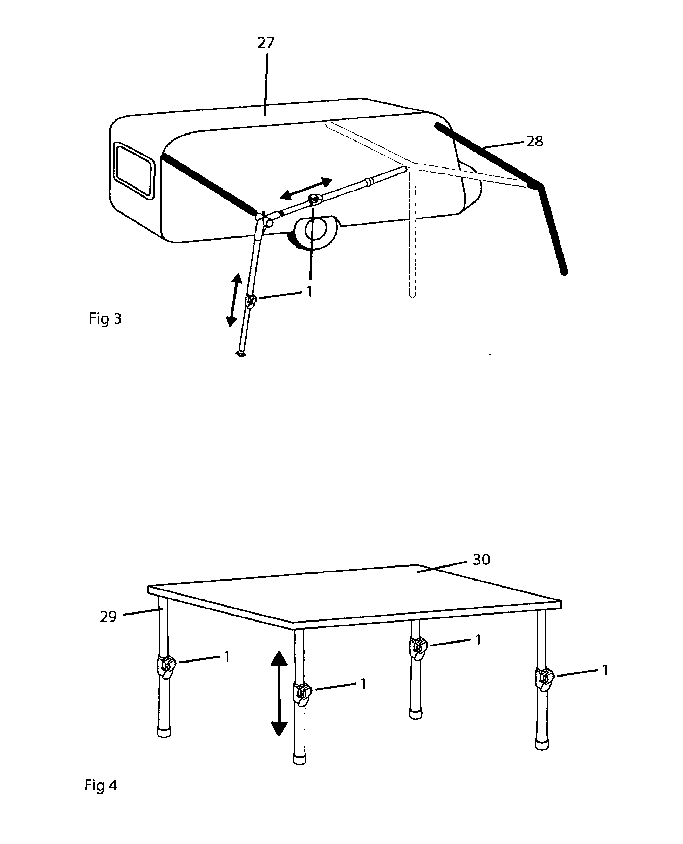

The clamping fitting 1 is typically used on telescopic poles in frames 28 for awnings to be mounted on the side of caravans 27 as disclosed in figure 3. It is especially preferred that each pair of telescopic poles can be mounted, positioned and locked by one person alone. Another advantageous use of the inventive fitting 1 is for arresting telescopic poles in legs 29 of a camping table 30 as disclosed in figure 4.

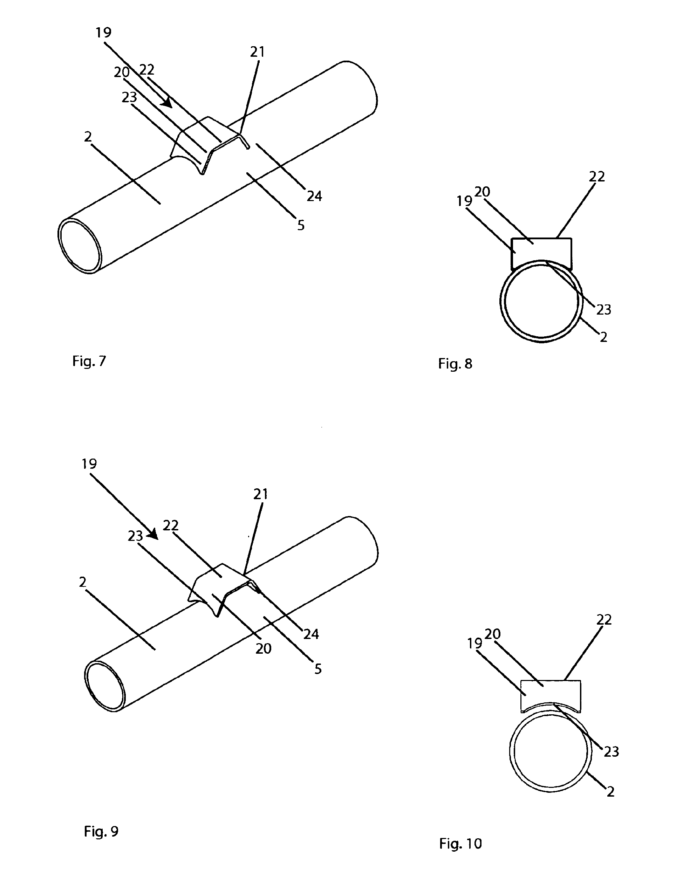

In figure 1 and 5 the clamping fitting 1 is disclosed in the locking position where the lever arm 13 is pressed by the action of one hands thumb into the lever is close to the inner pole 2 or even touches it. The inner eccentric end 12 of the arm then urges on top of the base part 22 of the clamp 19 so that the rims 23, 24 of the legs 20, 21 thereof is pressed into engagement with the surface of the pole 2 as shown in figures 7 and 8. The disclosed concave circular arc shape of the rims are typically cut when the plate material is cut out by a press. The rims then have a kind of "sharp" section with burrs unavoidably made by common plate cutting procedure. In combination with the disclosed inclined V-form the particular rim 23 or 24 that is exposed to axial load exerts a highly reliable resistant against sliding on the pole surface. As the engagement of the rims are exposed as a line and not as a single point the load is distributed well along the surface of the pole 2. The clamping fitting 1 may resist high loading forces over 100 kg on both metal and carbon poles.

In the locked position the leaf-spring 26 is compressed as disclosed in figure 5. When repositioning of the poles 2, 3 is necessary, the lever arm 13 is urges out from the pole 2 by the press of a thumb. Just a slight pivot of the arm 13 is necessary as the biased leaf-spring 26 in combination with the flat part 25 of the eccentric end 12 of the arm 13 forces the arm to pivot by it self to the un-locking position disclosed in figure 6. In that position the flat part 25 has come to rest on the base part 22 of the clamp 19 that is forced by the action of the leaf-spring 26 to engagement. At the same time the rims 23, 24 of the legs 20, 21 of the clamp 19 are lifted up from engagement with the pole 2. By the action of the leaf-spring 26 the rims 23, 24 are kept in safe distance of the surface of the pole 2 so that the telescopic poles 2, 3 can be re-positioned in relation to each other. When done so the desired position is simply arrested by the vice versa action, i.e. the lever arm 13 is pressed by the action of one hands thumb onto the housing 1. It is a great advantage that one person alone is capable of holding the outer tube 3 with one hand, the thumb of which can then manoeuvre the lever arm 13 at the same time. The other hand holds onto the inner pole 2.

Many deviations may be performed within the inventive idea and concept as long as the inventive core of claim 1 is maintained. The rims of the bridge-formed clamp may for example be toothed or have the shape of a knife edge. The rims can also have a rectangular cross-section as a cut plates edge. The eccentric inner part of the lever arm may have many different configurations as long as it is capable of providing the necessary pressure on the clamp so its rims are engaged with the inner pole.

## Claims

1. Clamping fitting (1) for telescopic poles (2, 3) comprising a tubular housing (4) surrounding the telescopic parts (5, 6) of the poles (2, 3) and into which the end (7) of the outer pole (3) is permanently fixed, a pair of parallel extending flanges (9, 10) arranged at the side (11) of the housing (4), in between which flanges (9, 10) is pivotally arranged the inner eccentric end (12) of a lever arm (13), having axis of pivot extending transverse to the axis of the poles (2, 3), an opening (18) being arranged in the periphery of the tubular housing (4) between the pair of flanges (9, 10),
**characterised in that**
a bridge-formed clamp (19) of plate material having two legs (20, 21) and a base part (22) there between is arranged in the opening (18), the free ends of the legs (20, 21) having rims (23, 24) extending transversely to the axis of the poles (2, 3) and being adapted to come into engagement with the outer surface of the inner pole (2), when the base part (22) is engaged by the inner eccentric end (12) of the lever arm (13).

2. Clamping fitting according to claim 1, **characterised in that** the legs (20, 21) of the bridge-formed clamp (19) extend away from each other with a V-form.

3. Clamping fitting according to claim 1, **characterised in that** the rims (23, 24) are cut sharp.

4. Clamping fitting according to claim 3, **characterised in that** the extensions of the rims (23, 24) are concave circular arcs.

5. Clamping fitting according to claim 1, **characterised in that** the bridge-formed clamp (19) is made of leaf-spring plate material.

6. Clamping fitting according to claim 1-5, **characterised in that** the eccentric inner end (12) of the lever arm (13) has a flat part (25) adapted to rest on the base part (22) of the bridge-formed clamp (19) in the un-locking position of the lever arm (13).

7. Clamping fitting according to claims 1-6, **characterised in that** a compression spring (26) is arranged in between the base part (22) of the bridge-formed clamp (19) and the outside of the inner pole (2).

8. Clamping fitting according to claim 7, **characterised in that** the compression spring is a leaf spring (26).

## Patentansprüche

1. Klemmstück (1) für Teleskopzeltstangen (2, 3), umfassend ein rohrförmiges Gehäuse (4), das die Teleskopteile (5, 6) der Stangen (2, 3) umgibt und in dem das Ende (7) der äußeren Stange (3) permanent befestigt ist, ein Paar sich parallel erstreckender Flansche (9, 10), die an der Seite (11) des Gehäuses (4) angeordnet sind und zwischen denen das innere exzentrische Ende (12) eines Hebelarms (13) schwenkbar angeordnet ist, dessen Schwenkachse sich quer zu der Achse der Stangen (2, 3) erstreckt, wobei eine Öffnung (18) im Umfang des rohrförmigen Gehäuses (4) zwischen dem Paar Flansche (9, 10) angeordnet ist,
**dadurch gekennzeichnet, dass**
eine brückenförmige Klemme (19) aus Plattenmaterial mit zwei Schenkeln (20, 21) und einem Basisteil (22) dazwischen in der Öffnung (18) angeordnet ist, wobei die freien Enden der Schenkel (20, 21) Ränder (23, 24) haben, die sich quer zu der Achse der Stangen (2, 3) erstrecken und geeignet sind, mit der Außenfläche der inneren Stange (2) in Eingriff zu kommen, wenn der Basisteil (22) von dem inneren exzentrischen Ende (12) des Hebelarms (13) in Eingriff genommen wird.

2. Klemmstück nach Anspruch 1, **dadurch gekennzeichnet, dass** sich die Schenkel (20, 21) der brückenartigen Klemme (19) V-förmig voneinander weg erstrecken.

3. Klemmstück nach Anspruch 1, **dadurch gekennzeichnet, dass** die Ränder (23, 24) scharf geschnitten sind.

4. Klemmstück nach Anspruch 3, **dadurch gekennzeichnet, dass** die Verlängerungen der Ränder (23, 24) konkave Kreisbögen sind.

5. Klemmstück nach Anspruch 1, **dadurch gekennzeichnet, dass** die brückenförmige Klemme (19) aus Blattfeder-Plattenmaterial hergestellt ist.

6. Klemmstück nach Ansprüchen 1 - 5, **dadurch gekennzeichnet, dass** das exzentrische innere Ende (12) des Hebelarms (13) einen flachen Teil (25) hat, der geeignet ist, auf dem Basisteil (22) der brückenförmigen Klemme (19) in der Entriegelungsposition des Hebelarms (13) zu ruhen.

7. Klemmstück nach Ansprüchen 1 - 6, **dadurch gekennzeichnet, dass** eine Druckfeder (26) zwischen dem Basisteil (22) der brückenförmigen Klemme (19) und der Außenseite der inneren Stange (2) angeordnet ist.

8. Klemmstück nach Anspruch 7, **dadurch gekennzeichnet, dass** die Druckfeder eine Blattfeder (26) ist.

## Revendications

1. Raccord de fixation par serrage (1) pour tiges télescopiques (2, 3) comprenant un logement tubulaire (4) entourant les parties télescopiques (5, 6) des tiges (2, 3) et dans lequel l'extrémité (7) de la tige extérieure (3) est fixée de façon permanente, une paire de flasques (9, 10) s'étendant parallèlement, disposée sur le côté (11) du logement (4), une extrémité excentrée intérieure (12) d'un bras de levier (13), comportant un axe de pivotement s'étendant transversalement à l'axe des tiges (2, 3), étant disposée à pivotement entre lesdits flasques (9, 10), une ouverture (18) étant disposée dans la périphérie du logement tubulaire (4) entre la paire de flasques (9, 10),
**caractérisé en ce que**
un élément de fixation par serrage sous forme de pont (19), constitué d'un matériau en plaque comportant deux pattes (20, 21) et une partie base (22) entre celles-ci, est disposé dans l'ouverture (18), les extrémités libres des pattes (20, 21) comportant des bords (23, 24) s'étendant transversalement à l'axe des tiges (2, 3) et étant conçues pour venir en contact avec la surface extérieure de la tige intérieure (2), lorsque l'extrémité excentrée intérieure (12) du bras de levier (13) vient en contact avec la partie base (22).

2. Raccord de fixation par serrage selon la revendication 1, **caractérisé en ce que** les pattes (20, 21) de l'élément de fixation par serrage sous forme de pont (19) s'étendent dans des directions s'éloignant l'une de l'autre suivant une forme en V.

3. Raccord de fixation par serrage selon la revendication 1, **caractérisé en ce que** les bords (23, 24) sont taillés vifs.

4. Raccord de fixation par serrage selon la revendication 3, **caractérisé en ce que** les étendues des bords (23, 24) sont des arcs de cercle concaves.

5. Raccord de fixation par serrage selon la revendication 1, **caractérisé en ce que** l'élément de fixation par serrage sous forme de pont (19) est constitué d'un matériau en plaque formant ressort à lame.

6. Raccord de fixation par serrage selon les revendications 1 à 5, **caractérisé en ce que** l'extrémité excentrée intérieure (12) du bras de levier (13) comporte une partie plane (25) conçue pour être en appui sur la partie base (22) de l'élément de fixation par serrage sous forme de pont (19) dans la position déverrouillée du bras de levier (13).

7. Raccord de fixation par serrage selon les revendications 1 à 6, **caractérisé en ce qu'**un ressort de compression (26) est disposé entre la partie base (22) de l'élément de fixation par serrage sous forme de pont (19) et la partie extérieure de la tige intérieure (2).

8. Raccord de fixation par serrage selon la revendication 7, **caractérisé en ce que** le ressort de compression est un ressort à lame (26).
